# EUROPEAN PATENT SPECIFICATION

(11) **EP 1 612 714 B1**
(45) Date of publication and mention of the grant of the patent: **24.06.2009**
(21) Application number: 05251674.7
(22) Date of filing: 18.03.2005
(51) Int. Cl.: G06K 9/00

(54) **Biometric authentication with transmission of scrambled data**
Biometrische Authentisierung mit Übertragung von verschlüsselten Daten
Authentification biométrique avec transmission des données embrouillées

(30) Priority: 28.06.2004 JP 2004190438; 30.07.2004 JP 2004224270; 08.10.2004 JP 2004296974
(43) Date of publication of application: 04.01.2006
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Higashiura, Yasuyuki, Inagi-shi Tokyo 206-8555 (JP); Kishino, Takumi, Inagi-shi Tokyo 206-8555 (JP); Eguchi, Shinichi, Inagi-shi Tokyo 206-8555 (JP); Katsumata, Yutaka, Inagi-shi Tokyo 206-8555 (JP); Watanabe, Masaki, Kawasaki-shi Kanagawa 211-8588 (JP); Endoh, Toshio, Kawasaki-shi Kanagawa 211-8588 (JP)
(74) Representative: Stebbing, Timothy Charles

(56) References cited:
- EP-A1- 1 237 091
- EP-A2- 0 864 996
- WO-A-20/04021884
- DE-A1- 10 206 843
- US-A- 4 993 068

## Description

This invention relates to a biometrics authentication method and biometrics authentication device to authenticate individuals using features of a portion of the human body, and in particular relates to a biometrics authentication method and biometrics authentication device suitable for verifying registered blood vessel image information for a body part against blood vessel information detected for a body part, in a contactless manner.

In the human body there are numerous parts which can be used to differentiate individuals, such as fingerprints of hand and toe, the retinas of the eyes, facial features, and blood vessel patterns. Advances in biometrics technology in recent years have been accompanied by proposals of various devices which identify biometric characteristics of such regions of the human body to authenticate individuals.

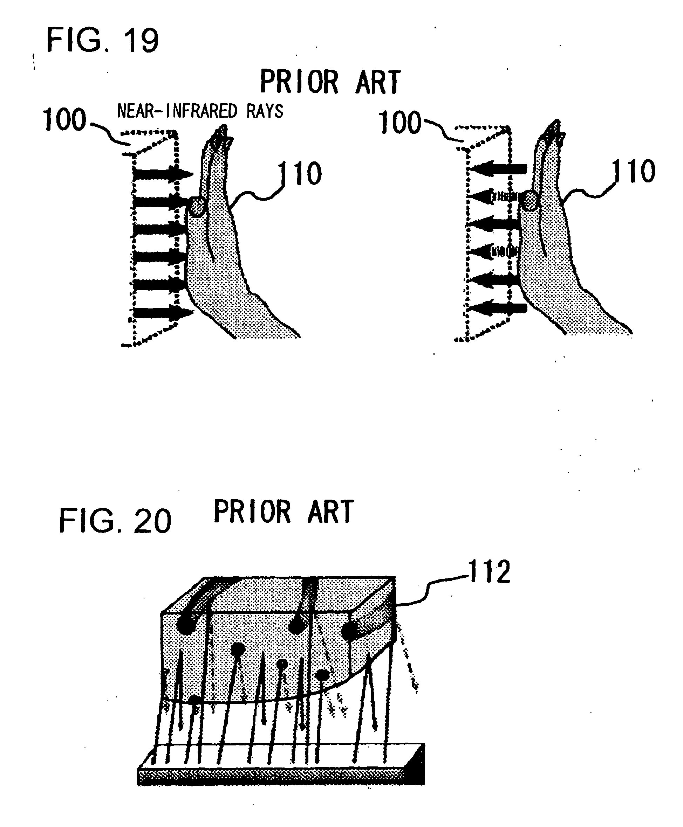

Of these, because blood vessels in the palms and fingers and palm prints provide a comparatively large quantity of individual characteristic data, they are suited to individual authentication where high reliability is required. In particular, the patterns of blood vessels (veins) remain unchanged from the fetus throughout life, and are thought to be completely unique, and so are suited to individual authentication. Fig. 19 to Fig. 22 explain conventional technology for authentication using the palm. As shown in Fig. 19, at the time of registration or authentication, the user brings the palm of a hand 110 close to an image capture device 100. The image capture device 100 emits near-infrared rays, which are incident on the palm of the hand 110. The image capture device 100 receives the near-infrared rays reflected from the palm of the hand 110 using a sensor.

As shown in Fig. 20, hemoglobin (haemoglobin) within the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the (reduction in) intensity of the reflected near-infrared rays can be used to identify the positions of veins.

As shown in Fig. 19, a user first registers in a server and ID card the vein image data for the palm of his own hand, using the image capture device 100 of Fig. 19. Next, in order to perform individual authentication, the user uses the image capture device 100 of Fig. 19 to cause the vein image data of his own palm to be read.

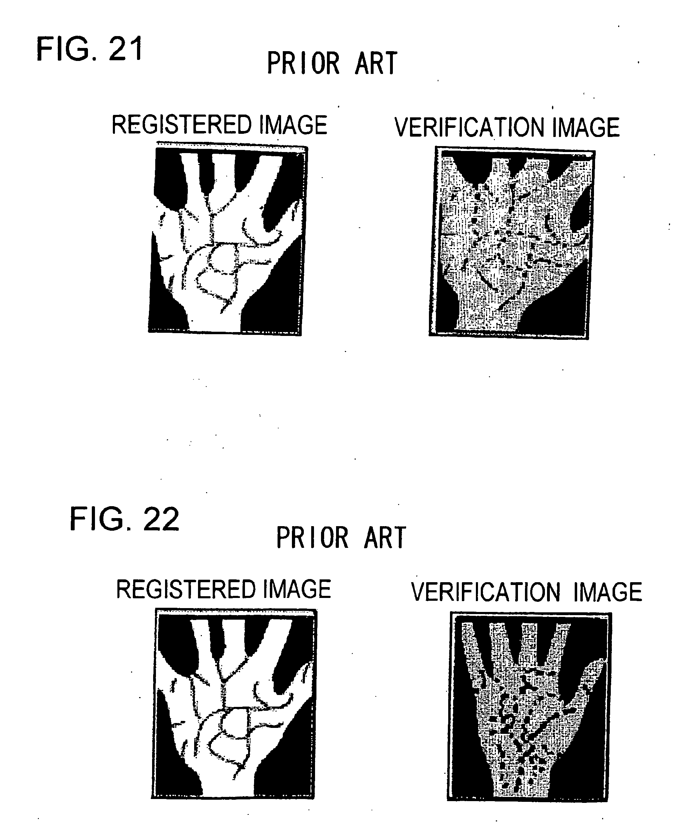

The individual is authenticated by comparing the patterns of veins in the registered vein image retrieved using the user's ID and in the vein verification image read by the image capture device 100. For example, on comparing the vein patterns in the registered image and a verification image as in Fig. 21, the individual is authenticated as the individual in question. On the other hand, upon comparison of the vein patterns in a registered image and in a verification image as in Fig. 22, the individual is not authenticated (see for example Japanese Patent Laid-open No. 2004-062826).

In a biometrics authentication system, measures must be taken to ensure that biometric characteristic data is not leaked to outside parties. Hence in the field of fingerprint authentication, a method of individual authentication has been proposed in which fingerprint characteristic data for an individual is registered in an IC card, and fingerprint characteristic data read from a fingerprint sensor is verified against the data within the IC card (Japanese Patent Laid-open No. 2000-293643).

Further, in the above proposal, the IC card stores comparatively low-level characteristic data A (which may be leaked to outside parties), and comparatively high-level characteristic data B which should be kept confidential, taking into consideration the processing capacity of the IC card. Characteristic data A is transmitted from the IC card to an external device including a fingerprint sensor, and in the external device verification with the characteristic data A (called "primary verification") is performed. The verification result and characteristic data B' extracted from an image from the fingerprint sensor are transmitted to the IC card, and within the IC card verification with the characteristic data B (called "secondary verification") is performed.

In this method, two stage verification operations are performed, externally and in the IC card, so that high-speed authentication can be achieved while maintaining security of biometric characteristic data.

However, in order to further prevent leakage of characteristic data, security measures should also be applied to communication between the sensor, external device, and the IC card. In the above-described technology of the prior art, at the time of registration of characteristic data A, B in the IC card from the external device, data is encrypted and transmitted, and is decrypted and stored in the IC card (Japanese Patent Laid-open No. 2000-293643, paragraph 0055). And to perform secondary verification, characteristic data B' is encrypted and transmitted from the external device to the IC card, and is decrypted and used in secondary verification in the IC card (Japanese Patent Laid-open No. 2000-293643, paragraphs 0061, 0062).

However, in the technology of the prior art, no security measures are taken with respect to biometric information sent from the sensor to the external device at the times of registration and verification. Consequently there are respects in which protection of biometric information detected by the sensor is lacking. And because characteristic data A which may be released externally is also encrypted, the IC card has had to bear the substantial processing burden of decrypting the characteristic data A and B.

Both EP 0864996 and JP 2002 93643 disclose an IC card and a method for personal identification using biometric information registered in the IC card. In order to reduce the processing load, when authentication is performed with a data processing device, the IC card entrusts part of the processing to the data processing device.

W02004/021884 discloses an identification device for obtaining images of blood vessels of a user.

It is therefore desirable to provide an authentication (validation) processing method for a biometrics authentication device and a biometrics authentication device which reduce the load on the IC card while further improving the security of biometric information.

It is further desirable to provide an authentication processing method for a biometrics authentication device and a biometrics authentication device which effectively utilize the processing functions of an external device to reduce the load on the IC card while further improving the security of biometric information.

It is still further desirable to provide an authentication processing method for a biometrics authentication device and a biometrics authentication device which reduce the load on the IC card while further improving the security of complex biometric information.

One aspect of the invention provides a biometric authentication device for verifying detected biometric characteristic data against registered biometric characteristic data, comprising: an image capture device for capturing an image of a living body part and transmitting the image; an IC card reader/writer for reading from and writing to an IC card storing first biometric characteristic data and second biometric characteristic data of a user; and a control unit for performing primary verification of said captured image with said first biometric characteristic data, creating final verification data, and transmitting to said IC card said final verification data, characterised in that the image capture device is operable to scramble the captured image and to transmit the scrambled captured image to the control unit, the control unit is operable to descramble the scrambled captured image received from the image capture device, to receive said first biometric characteristic data as scrambled first biometric characteristic data from said IC card, to descramble said scrambled first biometric characteristic data, to perform the primary verification and to scramble the said final verification data for the transmission to the IC card, and wherein said IC card is operable to descramble said scrambled final verification data, and to perform secondary verification of said descrambled final verification data with said stored second biometric characteristic data, and wherein said first characteristic biometric data is comparatively coarse (general, low definition) characteristic biometric data of a blood vessel image and said second characteristic biometric data is comparatively fine (detailed) characteristic biometric data of the blood vessel image.

In this aspect, it is preferable that the control unit aligns the (descrambled) captured image and the first characteristic data and create the above final verification data from the captured image.

Furthermore, it is preferable that at the time of registration of the said' characteristic data, the control unit descrambles a scrambled captured image from the image capture device, creates the comparatively coarse first biometrics characteristic data and the comparatively fine second characteristic data for the user from the unscrambled captured image, scrambles and transmits to the IC card the first biometrics characteristic data, and transmits to the IC card the encrypted second characteristic data. And the above IC card decrypts and stores the said encrypted second characteristic data.

Also , it is preferable that the control unit scrambles the final verification data and transmits the data to the IC card reader/writer, and that at the IC card reader/writer the scrambled final verification data is encrypted and transmitted to the control unit.

In this aspect , even through primary and second verification are performed by different units, because data is scrambled and transmitted, and moreover fine registration data B of importance for authentication is stored within the IC card while coarse registration data A is registered in the IC card in a scrambled state, descrambling processing need not be performed by the IC card. As the only processing within the IC card is descrambling of final verification data and verification, security is further improved, while keeping the load on the CPU of the IC chip in the IC card low.

Another aspect of the invention provides an authentication method.

Reference is now made, by way of example, to the accompanying drawings, in which:
Fig. 1 shows a configuration of a biometric(biometrics) authentication system of an embodiment of the invention;
Fig. 2 shows the configuration of the bank window device of Fig. 1;
Fig. 3 is an external view of the image capture device of Fig. 1;
Fig. 4 shows the configuration of the image capture device of Fig. 3;
Fig. 5 is an external view of the ATM of Fig. 1;
Fig. 6 is a block diagram of the ATM of Fig. 5;
Fig. 7 is a functional block diagram of biometric information registration/verification processing in an embodiment of the invention;
Fig. 8 explains the blood vessel image of Fig. 7;
Fig. 9 explains the blood vessel image data of Fig. 8;
Fig. 10 is a diagram of the flow of biometrics characteristic data registration processing in an embodiment of the invention;
Fig. 11 shows the flow of data in the registration processing of Fig. 10;
Fig. 12 explains the registration processing of Fig. 10;
Fig. 13 explains the characteristic data A and B of Fig. 10;
Fig. 14 is a diagram of the flow of biometrics characteristic data verification processing in an embodiment of the invention;
Fig. 15 shows the flow of data in the verification processing of Fig. 14;
Fig. 16 explains the verification processing of Fig. 14;
Fig. 17 is a diagram of the flow of biometrics characteristic data verification processing in another embodiment of the invention;
Fig. 18 shows the flow of data in the verification processing of Fig. 17;
Fig. 19 explains a conventional palm image capture device;
Fig. 20 explains the principle of a conventional palm image capture device;
Fig. 21 explains conventional palm authentication technology; and,
Fig. 22 further explains conventional palm authentication technology.

Below, embodiments of the invention are explained in the order of a biometrics authentication system, biometrics authentication processing, biometrics characteristic data registration processing, biometrics characteristic data authentication processing, and other embodiments.

### Biometrics Authentication System

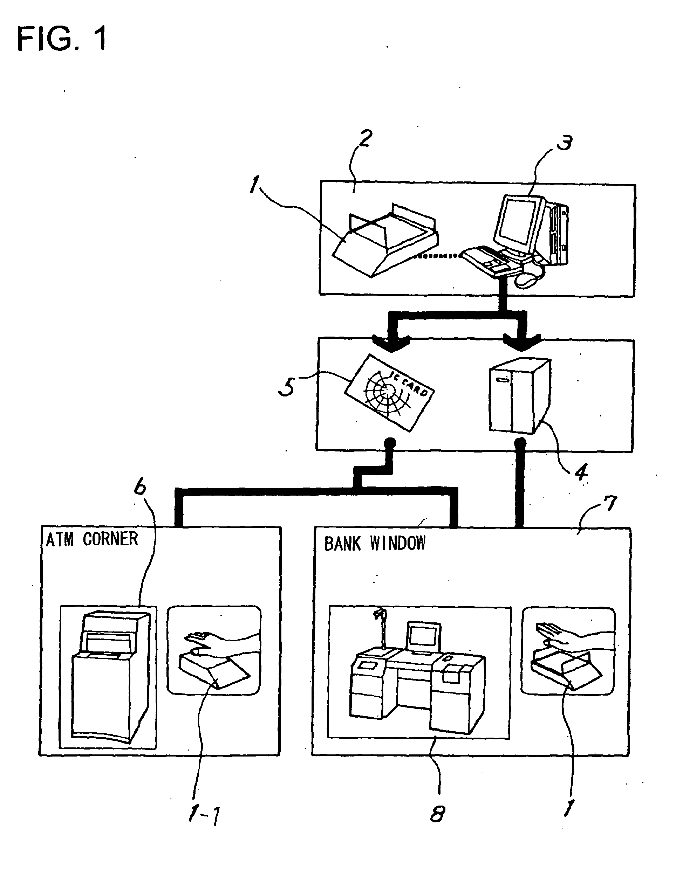

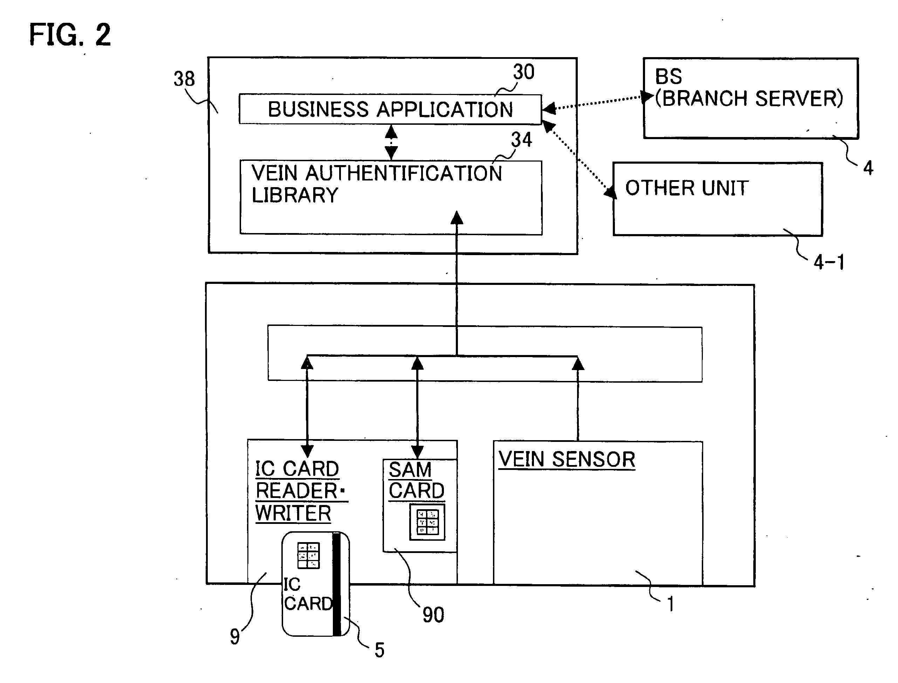

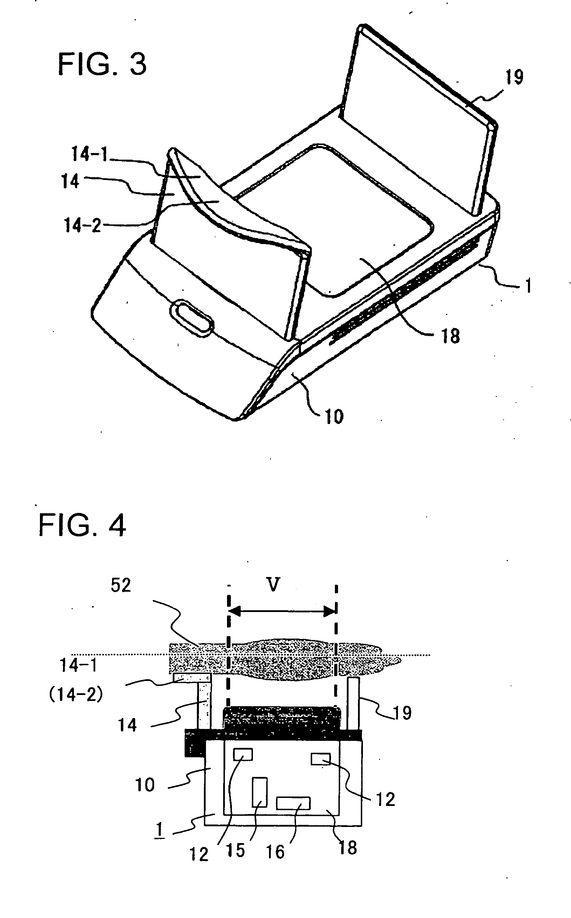

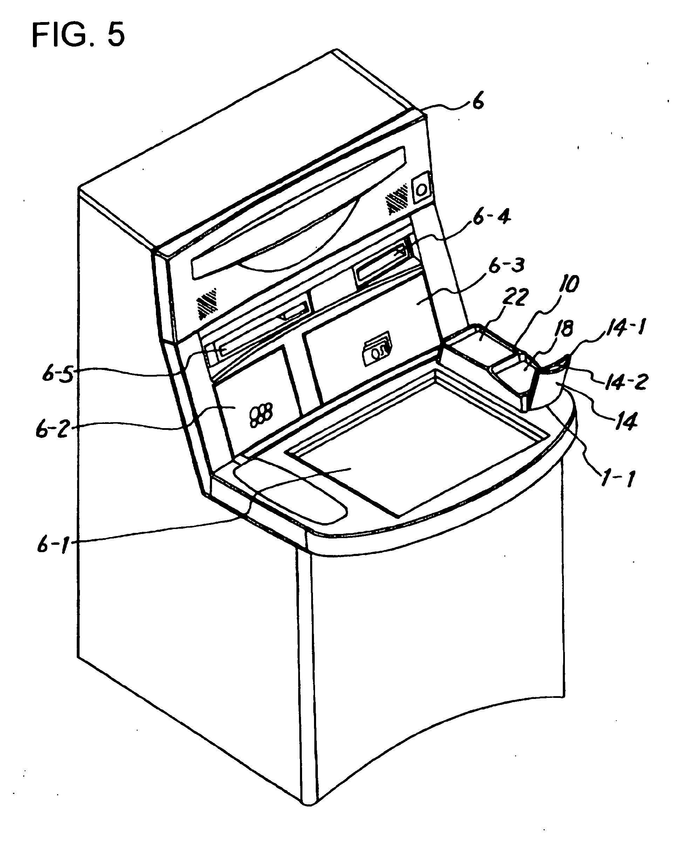

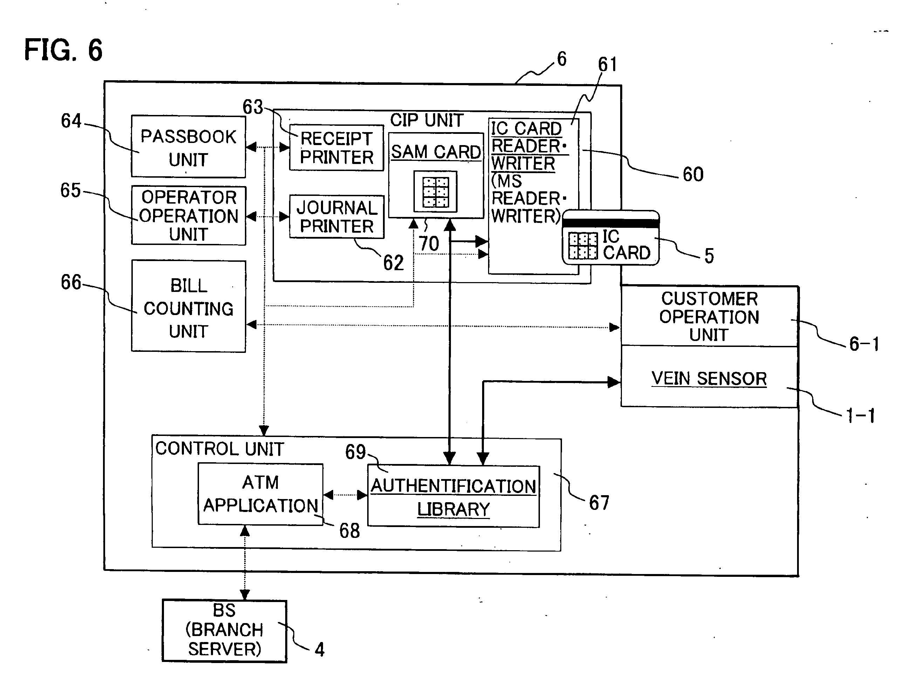

Fig. 1 shows the configuration of a biometrics authentication system of an embodiment of the invention, Fig. 2 shows the configuration of the business terminal device/bank window device of Fig. 1, Fig. 3 is an external view of the palm image capture device of Fig. 1 and Fig. 2, Fig. 4 shows the configuration of the image capture device of Fig. 3, Fig. 5 is an external view of the automated transaction machine of Fig. 1, and Fig. 6 shows the configuration of the automated transaction machine of Fig. 5.

Fig. 1 shows a palm vein pattern authentication system in a financial institution, as an example of a biometrics authentication system. A palm image capture device 1 explained in Fig. 3 and a branch office terminal (for example, a personal computer) 3 connected thereto are provided in an area 2 (e.g. window area) of the financial institution. A user requesting vein pattern authentication places his hand over the palm image capture device (hereafter called the "image capture device") 1. The image capture device 1 reads the palm image, and blood vessel extraction processing in the terminal 3 is used to extract the vein pattern, and this pattern is registered as vein data in the terminal device 3.

This vein data is stored in a storage area 4a of a database server 4 connected to the terminal device 3 and in an individual card (for example, an IC card) 5 held by the user. The server 4 is connected to a bank window terminal device 8 of a bank window area 7 of the financial institution, and the bank window terminal device 8 is connected to an image capture device 1.

In order to make a withdrawal or perform some other financial transaction at the bank window area 7 of the financial institution, the user inserts an IC card 5 into an IC card reader(explained in Fig. 2),and places his hand over the image capture device 1 provided in the bank window area 7. The image capture device 1 reads the palm image, and blood vessel image extraction processing by the window terminal device 8 extracts the vein pattern. Verification processing by the window terminal device 8 verifies (compares) this vein pattern, as vein data, against the vein data registered in the IC card 5 to authenticate the individual.

The server 4 can be connected to an ATM (automated cash insertion/dispensing machine) 6 of the financial institution, and the transactions through vein authentication may be performed at the ATM 6. When a user employs the ATM 6 to make a withdrawal or perform some other financial transaction, the user places his hand over an image capture device 1-1 provided in the ATM 6. The image capture device 1-1 reads the palm image. Similarly to the window terminal device 8, the ATM 6 extracts the vein pattern (blood vessel image), verifies this, as vein data, against the vein data registered in the IC card 5 held by the user, and authenticates (determines the identify of) the individual.

Fig. 2 and Fig. 3 show the configurations of the service/window terminal devices 3, 8 of Fig. 1. As shown in Fig. 2, in the terminal devices 3 and 8 are mounted an application 30 and a vein authentication library (program) 34. A vein sensor (palm image capture device) 1 and IC card reader/writer 9 are connected to the terminal devices 3 and 8.

The IC card reader/writer 9 reads and writes the IC chip and magnetic strip of the IC card 5 of a user. A security access module (SAM) is provided in the IC card reader/writer 9, and the module permits only authenticated access, to maintain the security of the IC card 5.

As shown in Fig. 3, the palm image capture device 1 of Fig. 1 and Fig. 2 has a sensor unit 18 mounted substantially in the center of a main unit 10. A front guide 14 is provided at a front portion (on the user side) of the sensor unit 18, and a rear guide 19 is provided at a rear portion. The front guide 14 is constructed of a sheet of transparent or substantially transparent synthetic resin.

The front guide 14 serves the purposes of guiding the hand of the user in the front and of supporting the wrist. Hence above the sensor unit 18, the front guide 14 aids the user by guiding the wrist, and also supports the wrist. As a result, the attitude of the palm above the sensor unit 18, that is, the position, inclination, and size can be regulated above the sensor unit 18. The cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist. The rear guide 19 serves to support the fingers.

As shown in Fig. 4, the sensor unit 18 is provided with an infrared sensor (CMOS sensor) and focusing lens 16, and with a distance sensor 15 in the center, and on the periphery thereof with a plurality of near-infrared light-emitting elements (LEDs) 12. For example, near-infrared LEDs are provided in eight places on the periphery, to emit near-infrared rays upwards.

The readable region V of this sensor unit 18 is regulated by the relation between the sensor, focusing lens, and near-infrared light emission region. Hence the position and height of the front guide 14 are set such that the supported wrist is positioned in the readable region V.

When a hand 52 is extended with palm flat, the palm has maximum area, and moreover is flat, so that when the palm is subjected to image capture in the image capture region V of the sensor unit 18, an accurate vein pattern which can be used in registration and verification is obtained. When the distance from the sensor unit 18 to the palm is within a prescribed range, a sharp, focused image is obtained by the sensor 16 of the sensor unit 18.

Hence as shown in Fig. 4, by supporting the wrist 52 with the front guide 14 above the sensor unit 18, the front guide 14 can guide and support the user's hand so that the position, inclination and height of the palm above the sensor unit 18 are made precise with respect to the image capture range of the sensor unit 18.

Next, the automated transaction machine (ATM) of Fig. 1 is explained. As shown in Fig. 5, the ATM 6 has, on the front face thereof, a card insertion/ejection inlet 6-4; a bankbook insertion/ejection inlet 6-5; a paper currency insertion/dispensing inlet 6-3; a coin insertion/dispensing inlet 6-2; and a user operation panel 6-1 for operation and display.

In this example, the image capture device 1-1 is provided on the side of the user operation panel 6-1. The sensor unit 18 explained in Fig. 4 is mounted on the forward side of the main unit 10 of the image capture device 1. On the forward portion (on the user side) of the sensor unit 18 is provided a front guide 14. The front guide 14 is constructed of a sheet of synthetic resin, transparent or substantially transparent. In order to serve the purposes of guiding the hand of the user in the front and of supporting the wrist, the cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

Further, the sensor unit 18 of the main unit 10 faces rearward and is inclined upward, and a flat portion 22 is provided therebehind.

As shown in Fig. 6, the ATM 1 has a CIP (Card Reader Printer) unit 60 having a card insertion/ejection inlet 6-4; a bankbook (passbook) unit 64 having a bankbook insertion/ejection inlet 6-5; a paper currency/coin counting unit 66 having a paper currency insertion/dispensing inlet 6-3 and a coin insertion/dispensing inlet 6-2; an attendant operation portion 65; a control unit 67; a user operation panel 6-1 (UOP) for operation and display; and an image capture device (vein sensor) 1-1.

The CIP unit 60 has an IC card reader/writer 61 which reads and writes the magnetic stripe and IC chip of an IC card 5; a receipt printer 63 which records transactions on a receipt; a journal printer 62 which prints the history of transactionson journal forms; and a security access module (SAM) 70.

The bankbook unit 64 prints transactions on pages of a bankbook, and when necessary turns the pages. The attendant operation portion 65 is for operations by an attendant, who can perform operations upon occurrence of a fault or during inspections according to status display. The paper currency/coin counting unit 66 differentiates, counts, and stores inserted paper currency and coins, and counts and dispenses paper currency and coins in the required quantities.

The control unit 67 communicates with the server 4, and has an ATM application 68 which controls ATM operation and an authentication library (program) 69 for authentication processing. A portion of this ATM application 68 controls biometric authentication guidance screens of the UOP (user operation panel) 6-1 in connection with the authentication library 69.

### Biometrics Authentication Processing Method

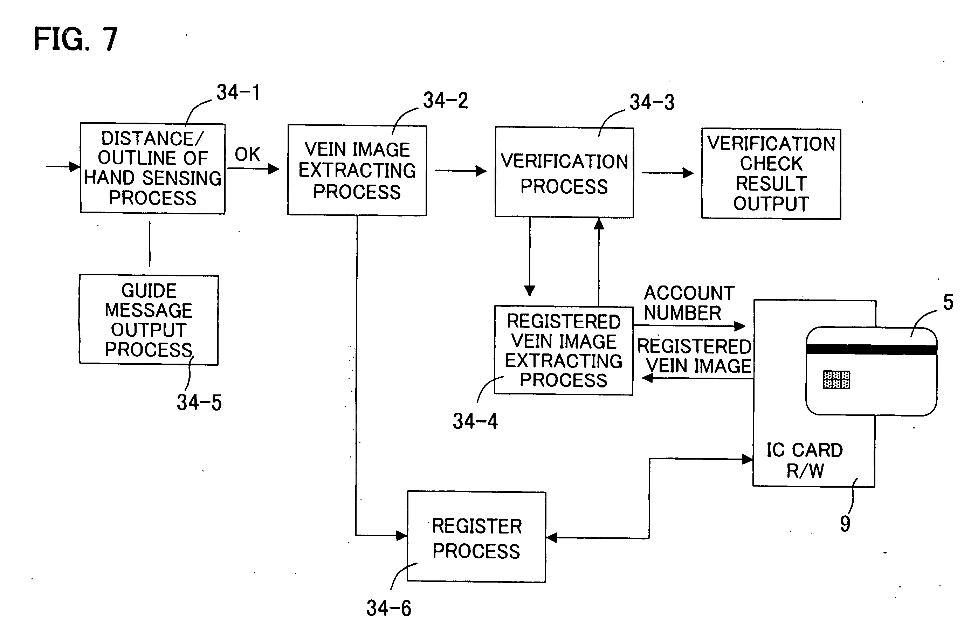

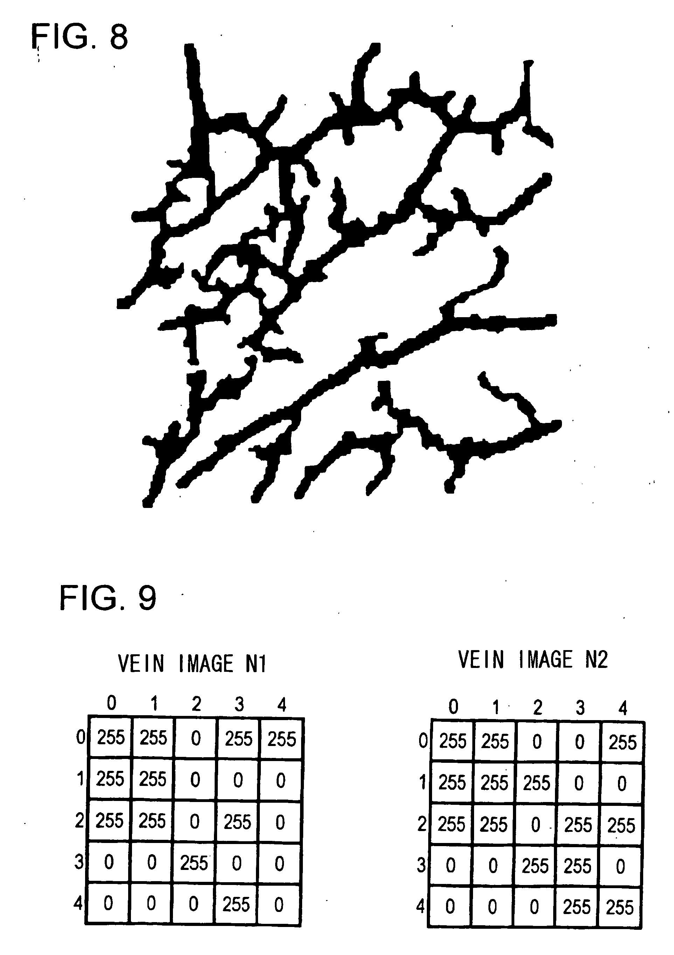

Fig. 7 is a block diagram of BIOMETRICS authentication processing in an embodiment of the invention, Fig. 8 explains the detected blood vessel image in Fig. 7, and Fig. 9 explains verification processing in Fig. 7.

As shown in Fig. 7, the authentication library 34 of the service/window terminal devices 3, 8 connected to the image capture device 1 execute a series of registration and verification processes 34-1 to 34-5. The authentication library 69 of the control portion 67 in the ATM 6 executes similar processing. The service/window terminal devices 3, 8 and the control portion 67 of the ATM 6 have, for example, a CPU and various types of memory, interface circuitry, and other circuits necessary for data processing. The CPU executes a series of registration and verification processes 34-1 to 34-5. As explained below, the IC chip of an IC card 5 also executes verification process 34-3.

In distance/hand outline detection processing 34-1, the CPU receives the distance measured by the distance sensor 15 from the image capture device 1-1 and judges whether the hand or other object is at a distance within a prescribed range from the sensor unit 18, and also detects the outline of the hand from the image captured by the sensor unit 18 and judges from the outline whether the image can be used in registration and verification processing. For example, the palm may not appear sufficiently in the image.

Guidance message output processing 34-5 is used to output to the display of the service/window terminal devices 3, 8 a message guiding the palm of the hand leftward, rightward, forward, backward, upward or downward when the distance detected by the distance sensor 15 and the position of the hand according to outline extraction indicates that the hand or similar is outside the image capture range, and when the image captured cannot be used in registration and verification processing. By this means, the palm of the user is guided over the image capture device 1.

Blood vessel image extraction processing 34-2 is used to extract a vein image from the image of the hand when hand outline detection processing 34-1 judges that an image has been captured with the hand held correctly. That is, as explained using Fig. 19 and Fig. 20, grayscale data of the image of the palm such as that of Fig. 9 is obtained through differences in reflectivity. The vein pattern image is an image like that shown in Fig. 8; the data is grayscale data such as that in Fig. 9.

Registered blood vessel image retrieval processing 34-4 retrieves registered blood vessel image data A, B corresponding to the individual ID (account number) from the storage portion of the IC chip in the IC card 5 shown in Fig. 1, Fig. 2 and Fig. 6. Verification processing 34-3 compares the blood vessel image data N1 detected in the blood vessel image detection processing 34-2 with the registered blood vessel image data N2 as shown in Fig. 9, performs verification processing, and outputs the verification result.

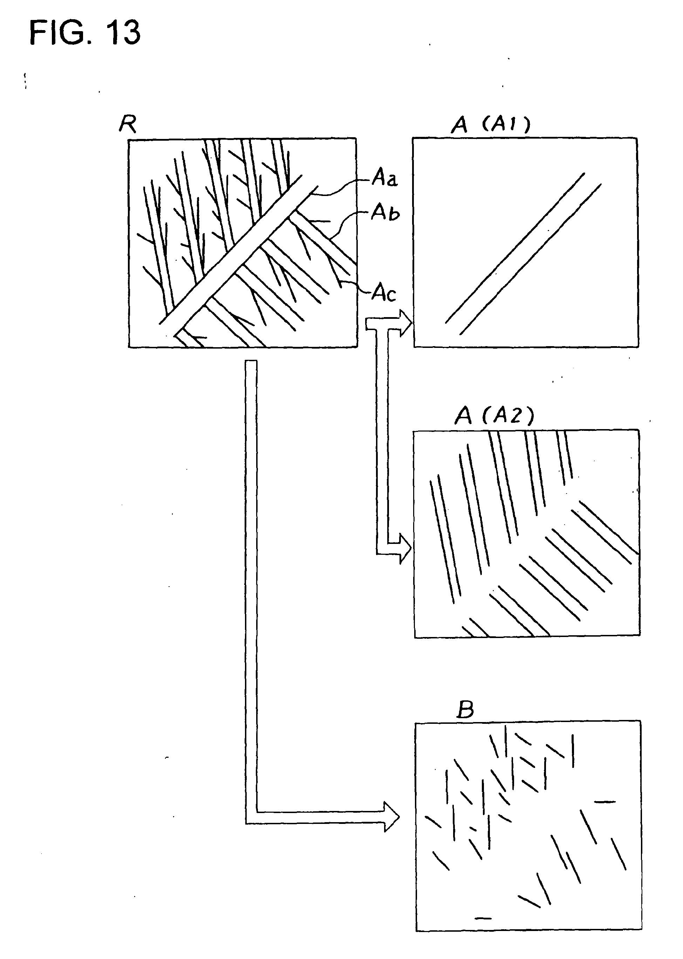

Registration processing 34-5 divides the detected blood vessel image data into comparatively coarse-level (low detail) blood vessel image data A and comparatively fine-level (high detail) blood vessel image data B, as shown in Fig. 13, and stores the results in the IC chip 50 of the IC card 5, via the IC card reader/writer 9.

In such a blood vessel image authentication system, the simultaneous achievement of confidentiality of blood vessel image data and faster authentication processing is advantageous for rapid biometric authentication.

### Biometrics Characteristic Data Registration Processing

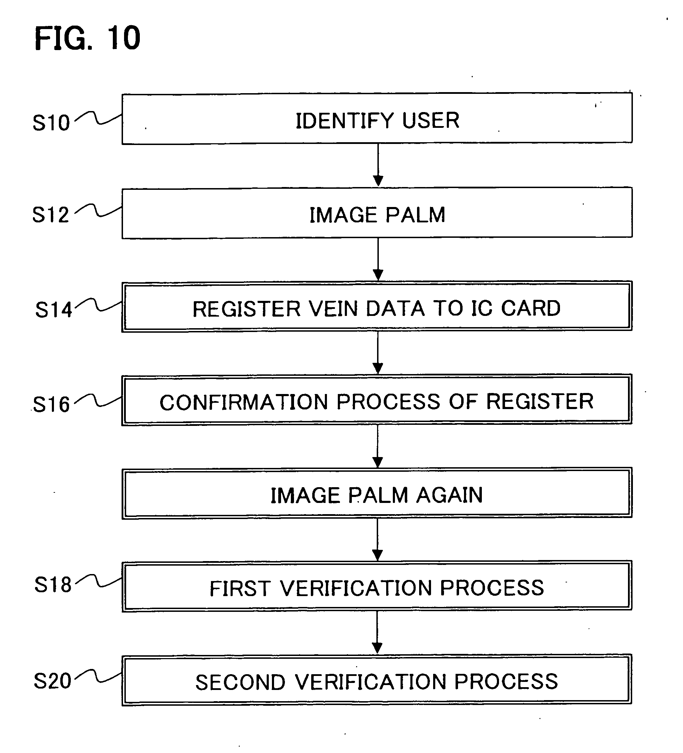

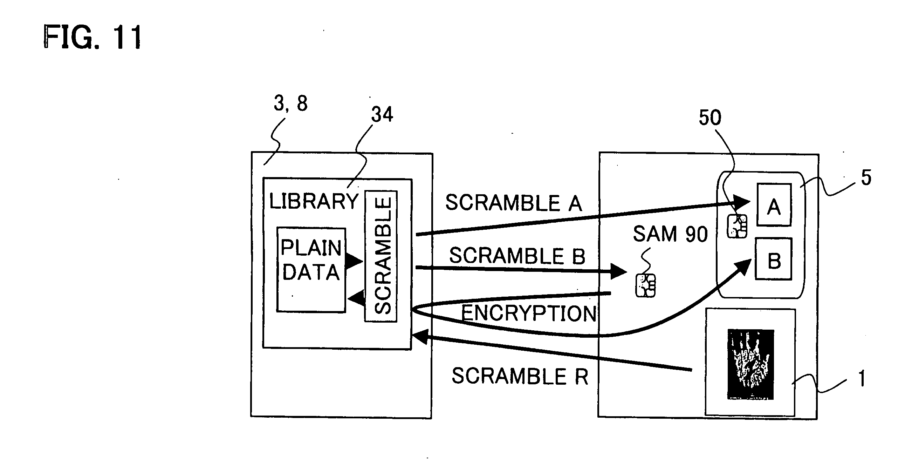

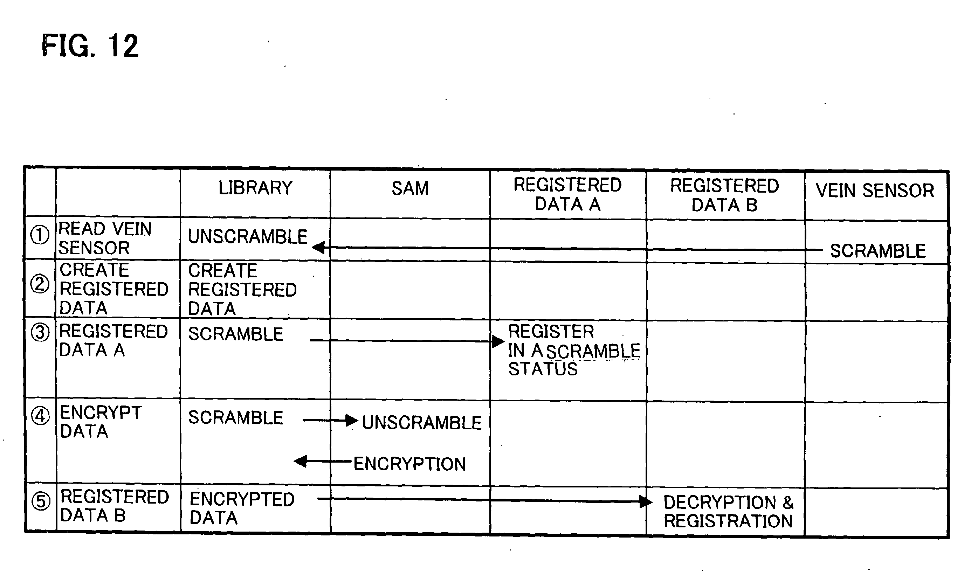

Next, the biometrics characteristic data registration processing outlined in Fig. 7 is explained in Fig. 10 to Fig. 13. Fig. 10 shows the flow of biometrics characteristic data registration processing in the IC card 5; Fig. 11 and Fig. 12 explain vein data registration in Fig. 10; and Fig. 13 explains the registration data A, B.

(S10) First, a user who has applied for IC card biometric authentication presents his IC card and driver's licence or other personal identification at the bank window area, and is authenticated by the issuing source of the IC card.

(S12) Upon being confirmed to be the individual in question, the user places his hand over the image capture device 1 so that an image of his palm can be captured.

(S14) As explained above, the registered blood vessel image data A, B is created from the captured image and is registered in the IC card 5. Registration processing is explained using Fig. 11 to Fig. 13. As shown in Fig. 11 and Fig. 12, image data (plain data) R captured by the image capture device 1 is scrambled using a prescribed algorithm, and is transmitted to the authentication libraries 34 of the service/window terminal devices 3 and 8. In the authentication libraries 34, the transmitted image data is descrambled and returned to plain data. The authentication library 34 creates the registration data A, B from the plain data R. As shown in Fig. 13, the plain data (blood vessel image data) R can be classified into trunk Aa, thick branch Ab, and fine branch Ac leading to thick branch Ab, as is seen in Fig. 8. The trunk A1 and thick branches A2 are divided into the comparatively coarse characteristic data A, and the thinbranches Ac are classified as the comparatively finer characteristic data B, to create the registration data A, B. The registration data A is comparatively coarse, and so does not include finer details as characteristics, but indicates only rougher characteristics. The registration data B is comparatively finer, and so indicates finer(more detailed, precise) characteristics.

Hence the registration data A is scrambled in the authentication library 34, and the scrambled registration data A is stored in the IC chip 50 of the IC card 5. On the other hand, the registration data B requires greater security. Therefore the data B is scrambled by the authentication library 34, and the scrambled registration data B is sent to the security access module 90 of the IC card reader/writer 9. The security access module 90 descrambles and encrypts the scrambledregistration data B by using a secret key. The result is sent to the authentication library 34, and from the authentication library 34, the encrypted registration data B is sent to the IC chip 50 of the IC card 5. The CPU of the IC chip 50 decrypts the data B by using the secret key, and stores the registration data B in the memory of the IC chip 50.

(S16) Next, execution proceeds to registration confirmation processing. That is, trial authentication is performed. For this purpose, the user again places his hand over the image capture device 1, to capture an image of his palm.

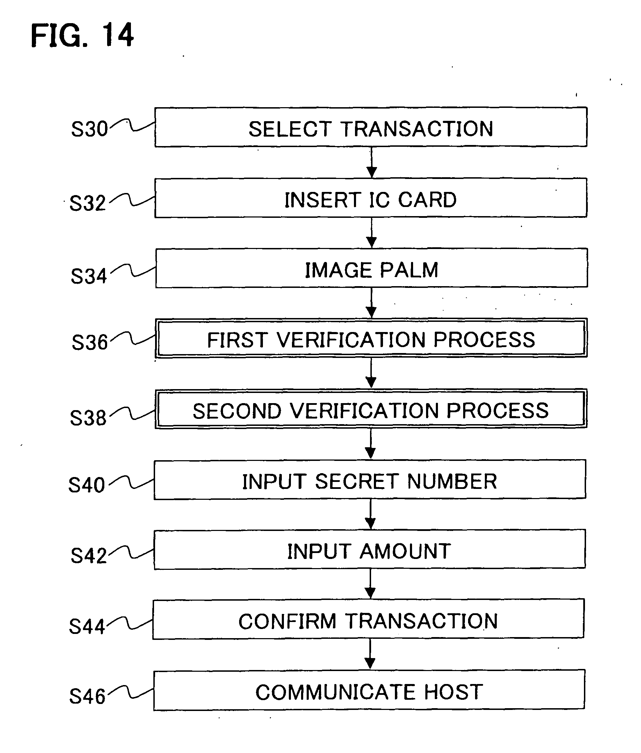

(S18) A series of verification (analysis and comparison) operations are performed using the authentication processing of Fig. 14 and later.

(S20) Similarly, secondary verification (final verification) is performed using the authentication processing of Fig. 14 and later. As a result, the validity of registration data A and B for authentication is confirmed.

In this way data is scrambled, transmitted, and the registration data B which is more important (reliable, secure) for authentication is also encrypted. The encryption and decryption are performed not at the service/window terminals 3, 8, but on the side of the IC card reader/writer 9, so that it is difficult for the encryption key and encryption algorithm to be identified on the side of the service/window terminal devices, and security is enhanced. At the time of registration, the CPU of the IC chip 50 in the IC card 5 performs only decryption processing of registration data B, and so the load imposed is small.

Further, because trial authentication is performed, the validity of the registration data A and B can be confirmed. Upon the end of registration, the plain data is automatically erased by the authentication library 34, so that confidentiality is further improved.

### Biometrics Characteristic Data Verification Processing

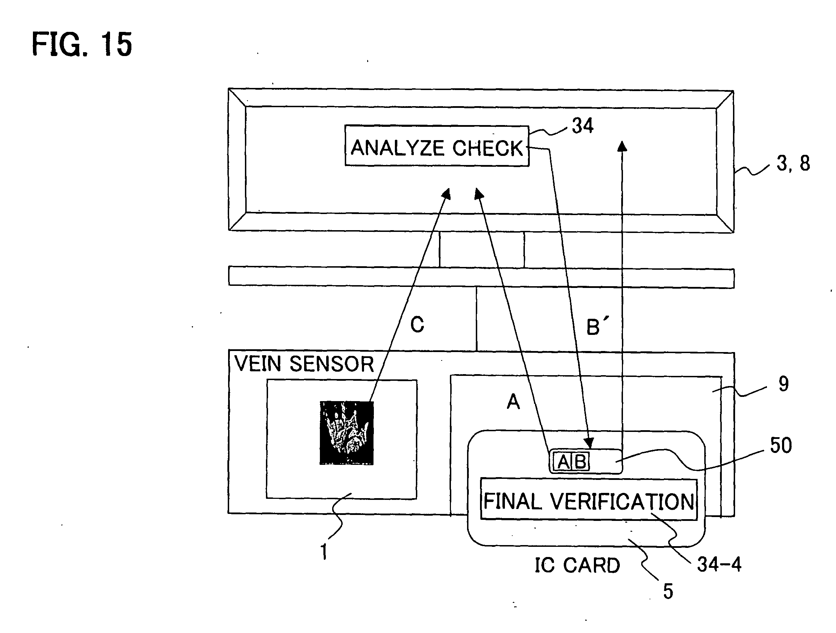

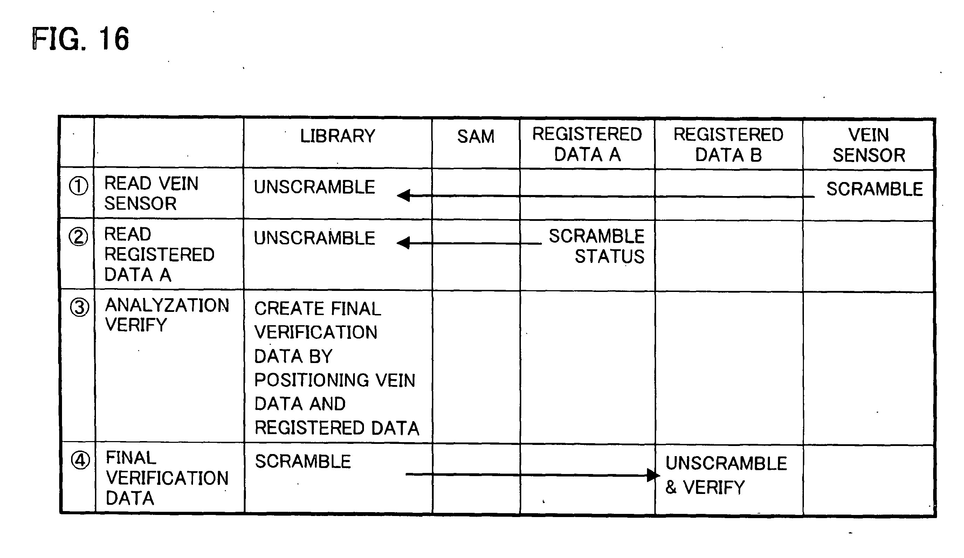

Next, the biometrics characteristic data verification processing outlined in Fig. 7 is further explained in Fig. 14 to Fig. 18. Fig. 14 shows the flow of transaction processing, including biometrics characteristic data verification processing using an IC card 5; Fig. 15 and Fig. 16 explain the vein data verification of Fig. 14.

(S30) First, a transaction is selected. At the window area, a user fills in a slip, and a teller performs input.

(S32) The user inserts the IC card 5 of the user into the IC card reader/writer 9, and the reader/writer 9 reads the magnetic stripe data (account number and similar) of the IC card 5.

(S34) Next, the user places his hand over the image capture device 1, and an image of the palm is captured.

(S36) Using the registration data A of the IC card 5, primary verification (analysis verification) is performed by the authentication libraries 34 of service/window terminal devices 3 and 8. That is, as shown in Fig. 15 and Fig. 16, the image data (plain data) C captured by the image capture device 1 is scrambled using a prescribed algorithm, and is transmitted to the authentication libraries 34 of the service/window terminal devices 3 and 8. At the authentication library 34, the transmitted image data is descrambled to return it to plain data. Next, the authentication library 34 reads scrambled registration data A from the IC card 5 and performs descrambling. In the example of Fig. 13, the registration data is returned to the comparatively coarse registration data A of trunks A1 and thick branches A2.

Next, the plain data and registration data A are aligned, e.g. mapped onto one another, and final verification data B' is created if alignment is successful. The fine branches Ac of the plain (image) data create the final verification data B' as the comparatively fine characteristic data. The authentication library 34 scrambles this final verification data B' and transmits it to the IC chip 50 of the IC card 5.

(S38) Next, final verification is performed within the IC card 5. That is, the CPU of the IC chip 50 in the IC card 5 descrambles the scrambled final verification data B', and performs verification (comparison) against the registration data B in memory. The verification result is presented to the authentication library 34.

(S40) If the verification result is satisfactory, a password number is input, and this is compared with the registered password number corresponding to the account number read from the magnetic stripe of the IC card 5.

(S42) If the result of password number comparison is satisfactory, the user inputs an amount.

(S44) The user confirms the transaction.

(S46) As a result, the service/window terminal device 3 and 8 communicates with the host. Upon a response from the host, cash is passed to the user in the case of withdrawal, and transfer confirmation is passed to the user in the case of fund transfer.

Thus data is scrambled and transmitted, and registration data B which is more important for authentication is stored within the IC card 5. Because the registration data A is registered in the IC card 5 in scrambled form, when the IC card 5 pass the data A to the authentication library 34, scrambling processing need not be performed within the IC card 5. Processing performed within the IC card 5 is descrambling and confirmation of the final verification data. Hence security is further improved, and the load on the CPU of the IC chip 50 in the IC card 5 is reduced.

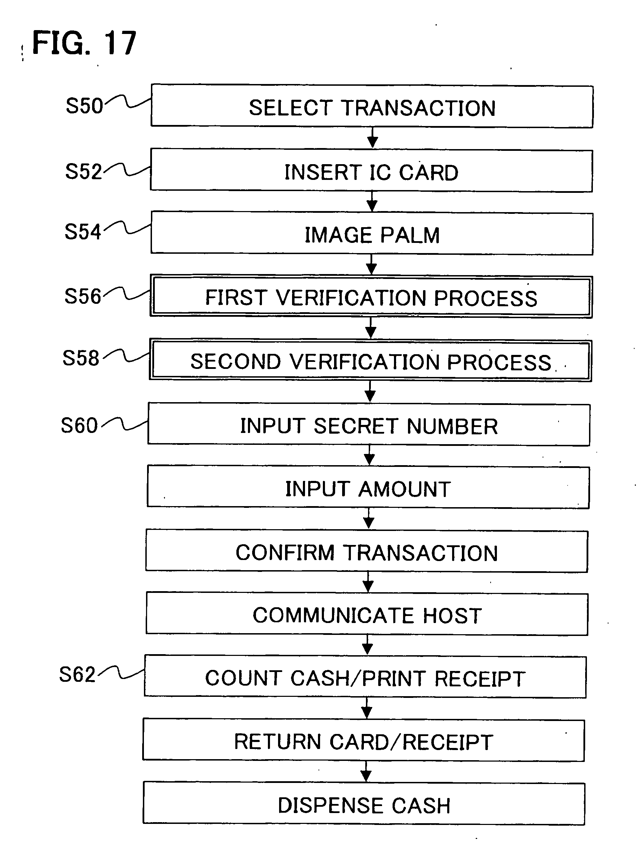

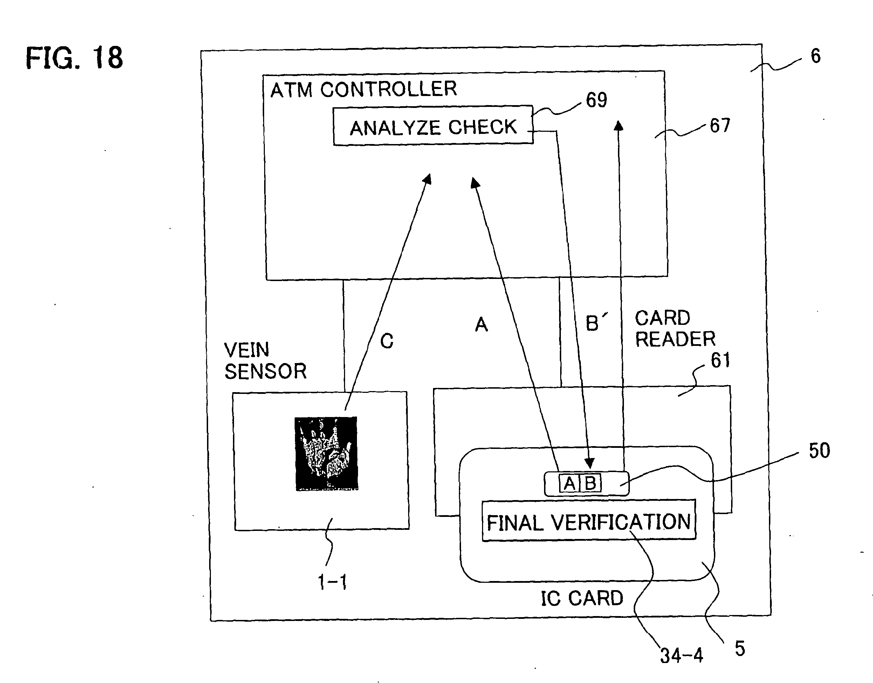

Fig. 17 and Fig. 18 explain transaction processing, including biometrics authentication processing, in an automated transaction machine.

(S50) First the transaction is selected. The transaction is selected on the UOP 6-1 of the ATM 6.

(S52) The user inserts an IC card 5 into the IC card reader/writer 9, which reads the magnetic stripe data (account number and similar).

(S54) Next, the user places his hand over the image capture device 1-1, and an image of the palm is captured.

(S56) Similarly to step S36, the registration data A of the IC card 5 is used to perform primary verification (analysis verification) in the authentication library 69 of the control portion 67 in the ATM 6.

(S58) Next, similarly to step S38, final verification is performed within the IC card 5.

(S60) If the verification result is satisfactory, the password number is input using the UOP 6-1, and this is compared with the registered password number corresponding to the account number read from the magnetic stripe of the IC card 5. If the password verification result is satisfactory, the user inputs an amount to the UOP 6-1. The user confirms the amount, and communication with the host takes place.

(S62) Upon response from the host, the amount of cash is counted in the case of withdrawal, and a receipt is printed. The IC card 5 and receipt are returned to the user, and cash is dispensed.

### Other Embodiments

In the above-described embodiment, authentication using palm vein patterns was explained; but application to authentication using finger vein patterns, palm prints and other characteristics of the palm, as well as to fingerprints, facial features, and other biometrics authentication is also possible. Automated teller machines at financial institutions were explained, but application to automated ticket dispensing machines, automated vending machines, and automated equipment in other fields, as well as to computers, the opening and closing of doors requiring individual authentication, use in place of keys, and other tasks is also possible.

In the above, embodiments of this invention have been explained; but various modifications can be made within the scope of the invention, and these modifications are not excluded from the scope of the invention.

Even when primary and secondary verification are performed by different units, the data is scrambled and transmitted, and moreover registration data B which is more important to authentication is stored within the IC card 5, and registration data A is registered in the IC card 5 in a scrambled state, so that scrambling processing need not be performed by the IC card. Because processing performed within the IC card is final verification data descrambling and verification, security can be further enhanced, and the load on the CPU of the IC chip in the IC card can be reduced.

The term 'IC card' used in the description is not to be construed as meaning solely a (e.g. 2-D) card, but rather includes any suitable medium incorporating an IC chip and which can be read by a reader device.

## Claims

1. A biometric authentication system for verifying detected biometric characteristic data against registered biometric characteristic data, the biometric authentication system including:
an IC card (5);
a biometric authentication device comprising:
an image capture device (1) for capturing an image of a living body part and transmitting the image;
an IC card reader/writer (9) for reading from and writing to the IC card (5) storing first biometric characteristic data and second biometric characteristic data of a user; and
a control unit (38) for performing primary verification of said captured image with said first biometric characteristic data, creating final verification data, and transmitting to said IC card (5) said final verification data;
**characterised in that**
the image capture device (1) is operable to scramble the captured image and to transmit the scrambled captured image to the control unit (38),
the control unit (38) is operable to descramble the scrambled captured image received from the image capture device (1), to receive said first biometric characteristic data as scrambled first biometric characteristic data from said IC card (5), to descramble said scrambled first biometric characteristic data, to perform the primary verification and to scramble the said final verification data for the transmission to the IC card (5), and
wherein said IC card (5) is operable to descramble said scrambled final verification data, and to perform secondary verification of said descrambled final verification data with said stored second biometric characteristic data, and wherein said IC card (5) stores said first characteristic biometric data as scrambled data, which is comparatively coarse characteristic biometric data, and stores said second characteristic biometric data as decrypted data, which is comparatively fine characteristic biometric data of the user; and
wherein said image capture device (1) of the biometric authentication device comprises a unit for capturing an image of blood vessels of a body part of said user,
and wherein said first biometric characteristic data is comparatively coarse characteristic data of said blood vessel image, and said second biometric characteristic data is comparatively fine characteristic data of said blood vessel image.

2. The biometric authentication system according to Claim 1, wherein said control unit (38) of the biometric authentication device performs primary verification by aligning said captured image and said first biometric characteristic data and creates the final verification data from the captured image.

3. The biometric authentication system according to Claim 1 or 2, wherein said control unit (38) of the biometric authentication device, at the time of registration of said biometric characteristic data, descrambles said scrambled captured image from the image capture device (1), creates the comparatively coarse first biometric characteristic data and the comparatively fine second biometric characteristic data for said user from said descrambled captured image, scrambles and transmits to said IC card (5) said first biometric characteristic data, and transmits to said IC card (5) said second biometric characteristic data as encrypted second biometric characteristic data,
and wherein said IC card (5) stores said scrambled first biometric data, and decrypts and stores said encrypted second biometric characteristic data.

4. The biometric authentication system according to Claim 3, wherein said control unit (38) scrambles said final verification data and transmits the scrambled final verification data to said IC card reader/writer (9),
and wherein said IC card reader/writer (9) descrambles and encrypts said scrambled final verification data and transmits the encrypted final verification data to said control unit (38).

5. The biometric authentication system according to any preceding Claim, wherein said unit of said image capture device (1) is operable to capture images of blood vessels of a palm of said user.

6. A biometric authentication method for verifying detected biometric characteristic data from a living body against registered biometric characteristic data for individual authentication of a user, comprising the steps of:
capturing an image of said living body in an image capture device (1), and scrambling and transmitting the captured image to a control unit (38);
descrambling said transmitted scrambled captured image in said control unit (38);
receiving comparatively coarse first biometric characteristic data of a user, in a scrambled state, from an IC card (5) of the user, the first biometric characteristic data being stored in the scrambled state in the IC card;
performing primary verification of said captured image with said first characteristic data, and creating final verification data in said control unit (38);
scrambling and transmitting to said IC card (5) said final verification data; and
descrambling said final verification data, and performing secondary verification with stored comparatively fine second biometric characteristic data of the user, in said IC card (5), wherein the second biometric characteristic data is stored in the IC card in a decrypted state; and
wherein said captured image comprises a blood vessel image of said living body,
and wherein said first biometric characteristic data is comparatively coarse characteristic data of said blood vessel image, and said second biometric characteristic data is comparatively fine characteristic data of said blood vessel image.

7. The biometric authentication method according to Claim 6, wherein said primary verification and creation of final verification data comprises:
a step of aligning said captured image and said first biometric characteristic data; and
a step of creating said final verification data from said captured image.

8. The biometric authentication method according to Claim 6 or 7, further comprising a registering step of registering said characteristic data,
wherein said registering step comprises the steps of:
descrambling a scrambled captured image from the image capture device (1) in said control unit (38);
creating, from said descrambled captured image, comparatively coarse first biometric characteristic data and comparatively fine second biometric characteristic data of said user;
scrambling said first biometric characteristic data, and transmitting the scrambled first biometric characteristic data to said IC card (5);
transmitting encrypted second biometric characteristic data to said IC card (5);
decrypting said encrypted second biometric characteristic data;
and storing the scrambled first biometric characteristic data and the decrypted second biometric characteristic data, in said IC card (5).

9. The biometric authentication method according to any of Claims 6 to 8, further comprising the steps of:
scrambling said final verification data and transmitting the scrambled final verification data to an IC card reader/writer (9);
descrambling and encrypting said scrambled final verification data in said IC card reader/writer (9); and
transmitting said encrypted final verification data to said control unit (38) from said IC card reader/writer (9).

10. The biometric authentication method according to any of Claims 6 to 9, wherein said blood vessel image comprises blood vessels of a palm of said user.

## Patentansprüche

1. System zur biometrischen Authentisierung, zum Verifizieren detektierter biometrischer charakteristischer Daten gegenüber registrierten biometrischen charakteristischen Daten, welches System zur biometrischen Authentisierung enthält:
eine IC-Karte (5);
eine Anordnung zur biometrische Authentisierung mit:
einer Bilderfassungsanordnung (1) zum Erfassen eines Bildes eines Teils eines lebenden Körpers und Senden des Bildes;
einem IC-Karten-Leser/Schreiber (9) zum Lesen von der und Schreiben auf die IC-Karte (5), die erste biometrische charakteristische Daten und zweite biometrische charakteristische Daten eines Nutzers speichert; und
einer Steuereinheit (38) zum Ausführen einer primären Verifizierung des erfassten Bildes mit den ersten biometrischen charakteristischen Daten, Erstellen von endgültigen Verifizierungsdaten und Senden der endgültigen Verifizierungsdaten an die IC-Karte (5);
**dadurch gekennzeichnet, dass**
die Bilderfassungsanordnung (1) betriebsfähig ist, um das erfasste Bild zu scrambeln und das gescrambelte erfasste Bild an die Steuereinheit (38) zu senden,
die Steuereinheit (38) betriebsfähig ist, um das gescrambelte erfasste Bild, das von der Bilderfassungsanordnung (1) empfangen wird, zu entscrambeln, die ersten biometrischen charakteristischen Daten als gescrambelte erste biometrische charakteristische Daten von der IC-Karte (5) zu empfangen, die gescrambelten ersten biometrischen charakteristischen Daten zu entscrambeln, die primäre Verifizierung auszuführen und die endgültigen Verifizierungsdaten für das Senden an die IC-Karte (5) zu scrambeln,
bei dem die IC-KarLe (5) betriebsfähig ist, um die gescrambelten endgültigen Verifizierungsdaten zu entscrambeln und eine sekundär Verifizierung der entscrambelten endgültigen Verifizierungsdaten mit den gespeicherten zweiten biometrischen charakteristischen Daten auszuführen, und bei dem die IC-Karte (5) die ersten charakteristischen biometrischen Daten als gescrambelte Daten speichert, die vergleichsweise grobe charakteristische biometrische Daten sind, und die zweiten charakteristischen biometrischen Daten als entschlüsselte Daten speichert, die vergleichsweise feine charakteristische biometrische Daten des Nutzers sind; und bei dem die Bilderfassungsanordnung (1) der Anordnung zur biometrischen Authentisierung eine Einheit zum Erfassen eines Bildes von Blutgefäßen eines Körperteils des Nutzers umfasst,
und bei dem die ersten biometrischen charakteristischen Daten vergleichsweise grobe charakteristische Daten des Blutgefäßbildes sind und die zweiten biometrischen charakteristischen Daten vergleichsweise feine charakteristische Daten des Blutgefäßbildes sind.

2. System zur biometrischen Authentisierung nach Anspruch 1, bei dem die Steuereinheit (38) der Anordnung zur biometrischen Authentisierung die primäre Verifizierung durch Ausrichten des erfassten Bildes und der ersten biometrischen charakteristischen Daten ausführt und die endgültigen verifizierungsdaten von dem erfassten Bild erstellt.

3. System zur biometrischen Authentisierung nach Anspruch 1 oder 2, bei dem die Steuereinheit (38) der Anordnung zur biometrischen Authentisierung, zu der Zeit der Registrierung der biometrischen charakteristischen Daten, das gescrambelte erfasste Bild von der Bilderfassungsanordnung (1) entscrambelt, die vergleichsweise groben ersten biometrischen charakteristischen Daten und die vergleichsweise feinen zweiten biometrischen charakteristischen Daten für den Nutzer von dem entscrambelten erfassten Bild erstellt, die ersten biometrischen charakteristischen Daten scrambelt und an die IC-Karte (5) sendet und die zweiten biometrischen charakteristischen Daten als verschlüsselte zweite biometrische charakteristische Daten an die IC-Karte (5) sendet,
und bei dem die IC-Karte (5) die gescrambelten ersten biometrischen Daten speichert und die verschlüsselten zweiten biometrischen charakteristischen Daten entschlüsselt und speichert.

4. System zur biometrischen Authentisierung nach Anspruch 3, bei dem die Steuereinheit (38) die endgültigen Verifizierungsdaten scrambelt und die gescrambelten endgültigen Verifizierungsdaten an den IC-Karten-Leser/Schreiber (9) sendet,
und bei dem der IC-Karten-Leser/Schreiber (9) die gescrambelten endgültigen Verifizierungsdaten entscrambelt und verschlüsselt und die verschlüsselten endgültigen Verifizierungsdaten an die Steuereinheit (38) sendet.

5. System zur biometrischen Authentisierung nach einem vorhergehenden Anspruch, bei dem die Einheit der Bilderfassungsanordnung (1) betriebsfähig ist, um Bilder von Blutgefäßen einer Handfläche des Nutzers zu erfassen.

6. Verfahren zur biometrischen Authentisierung, zum Verifizieren dctcktierter biometrischer charakteristischer Daten von einem lebenden Körper gegenüber registrierten biometrischen charakteristischen Daten zur individuellen Authentisierung eines Nutzers, mit den Schritten:
Erfassen eines Bildes des lebenden Körpers in einer Bilderfassungsanordnung (1) sowie Scrambeln und Senden des erfassten Bildes an eine Steuereinheit (38);
Entscrambeln des gesendeten gescrambelten erfassten Bildes in der Steuereinheit (38);
Empfangen von vergleichsweise groben ersten biometrischen charakteristischen Daten eines Nutzers, in einem gescrambelten Zustand, von einer IC-Karte (5) des Nutzers, welche ersten biometrischen charakteristischen Daten in dem gescrambelten Zustand in der IC-Karte gespeichert werden;
Ausführen einer primären Verifizierung des erfassten Bildes mit den ersten charakteristischen Daten und Erstellen von endgültigen Verifizicrungsdaten in der Steuereinheit (38);
Scrambeln und Senden der endgültigen Verifizierungsdaten an die IC-Karte (5); und
Entscrambeln der endgültigen Verifizierungsdaten und Ausführen einer sekundären Verifizierung mit gespeicherten, vergleichsweise feinen zweiten biometrischen charakteristischen Daten des Nutzers in der IC-Karte (5), bei dem die zweiten biometrischen charakteristischen Daten in der IC-Karte in einem entschlüsselten Zustand gespeichert werden;
bei dem das erfasste Bild ein Blutgefäßbild des lebenden Körpers umfasst
und bei dem die ersten biometrischen charakteristischen Daten vergleichsweise grobe charakteristische Daten des Blutgefäßbildes sind und die zweiten biometrische charakteristischen Daten vergleichsweise feine charakteristische Daten des Blutgefäßbildes sind.

7. Verfahren zur biometrischen Authentisierung nach Anspruch 6, bei dem die primäre Verifizierung und Erstellung von endgültigen Verifizierungsdaten umfasst:
einen Schritt zum Ausrichten des erfassten Bildes und der ersten biometrischen charakteristischen Daten; und
einen Schritt zum Erstellen der endgültigen Verifizierungsdaten von dem erfassten Bild.

8. Verfahren zur biometrischen Authentisierung nach Anspruch 6 oder 7, ferner mit einem Registrierschritt zum Registrieren der charakteristischen Daten,
bei dem der Registrierschritt die Schritte umfasst:
Entscrambeln eines gescrambelten erfassten Bildes von der Bilderfassungsanordnung (1) in der Steuereinheit (38);
Erstellen, von dem entscrambelten erfassten Bild, vergleichsweise grober erster biometrischer charakteristischer Daten und vergleichsweise feiner zweiter biometrischer charakteristischer Daten des Nutzers;
Scrambeln der ersten biometrischen charakteristischen Daten und Senden der gescrambelten ersten biometrischen charakteristischen Daten an die IC-Karte (5);
Senden von verschlüsselten zweiten biometrischen charakteristischen Daten an die IC-Karte (5);
Entschlüsseln der verschlüsselten zweiten biometrischen charakteristischen Daten;
und Speichern der gescrambelten ersten biometrischen charakteristischen Daten und der entschlüsselten zweiten biometrischen charakteristischen Daten in der IC-Karte (5).

9. Verfahren zur biometrischen Authentisierung nach einem der Ansprüche 6 bis 8, ferner mit den Schritten:
Scrambeln der endgültigen Verifizierungsdaten und Senden der gescrambelten endgültigen Verifizierungsdaten an einen IC-Karten-Leser/Schreiber (9);
Entscrambeln und Verschlüsseln der gescrambelten endgültigen Verifizierungsdaten in dem IC-Karten-Leser/Schreiber (9); und
Senden der verschlüsselten endgültigen Verifizierungsdaten von dem IC-Karten-Leser/Schrciber (9) an die Steuereinheit (38).

10. Verfahren zur biometrischen Authentisierung nach einem der Ansprüche 6 bis 9, bei dem das Blutgefäßbild Blutgefäße einer Handfläche des Nutzers umfasst.

## Revendications

1. Système d'authentification biométrique pour vérifier des données de caractéristiques biométriques détectées par rapport à des données de caractéristiques biométriques enregistrées, le système d'authentification biométrique comprenant :
une carte à puce (5) ;
un dispositif d'authentification biométrique comprenant :
un dispositif de capture d'image (1) pour capturer une image d'une partie d'un corps vivant et pour transmettre l'image ;
un dispositif de lecture/écriture de carte à puce (9) pour lire et écrire sur la carte à puce (5) mémorisant des premières données de caractéristiques biométriques et des deuxièmes données de caractéristiques biométriques d'un utilisateur ; et
une unité de commande (38) pour effectuer une vérification primaire de ladite image prise par rapport auxdites premières données de caractéristiques biométriques, créer des données de vérification finales, et transmettre à ladite carte à puce (5) lesdites données de vérification finales ;
**caractérisé en ce que**
le dispositif de capture d'image (1) peut être utilisé pour brouiller l'image prise et pour transmettre l'image prise brouillée à l'unité de commande (38),
l'unité de commande (38) peut être utilisée pour désembrouiller l'image prise brouillée reçue du dispositif de capture d'image (1), pour recevoir lesdites premières données de caractéristiques biométriques en tant que premières données de caractéristiques biométriques brouillées de ladite carte à puce (5), pour désembrouiller lesdites premières données de caractéristiques biométriques brouillées, pour effectuer la vérification primaire et pour brouiller lesdites données de vérification finales pour la transmission à la carte à puce (5), et
dans lequel ladite carte à puce (5) peut être utilisée pour désembrouiller lesdites données de vérification finales brouillées, et pour effectuer une vérification secondaire desdites données de vérification finales désembrouillées par rapport auxdites deuxièmes données de caractéristiques biométriques mémorisées, et dans lequel ladite carte à puce (5) mémorise lesdites premières données de caractéristiques biométriques en tant que données brouillées, qui sont des données de caractéristiques biométriques relativement grossières, et mémorise lesdites deuxièmes données de caractéristiques biométriques en tant que données déchiffrées, qui sont des données de caractéristiques biométriques relativement fines de l'utilisateur ; et
dans lequel ledit dispositif de capture d'image (1) du dispositif d'authentification biométriques comprend une unité pour capturer une image des vaisseaux sanguins d'une partie corporelle dudit utilisateur,
et dans lequel lesdites premières données de caractéristiques biométriques sont des données de caractéristiques relativement grossières de ladite image de vaisseaux sanguins, et lesdites deuxièmes données de caractéristiques biométriques sont des données de caractéristiques relativement fines de ladite image de vaisseaux sanguins.

2. Système d'authentification biométrique selon la revendication 1, dans lequel ladite unité de commande (38) du dispositif d'authentification biométrique effectue une vérification primaire en alignant ladite image prise et lesdites premières données de caractéristiques biométriques et crée les données de vérification finales à partir de l'image prise.

3. Système d'authentification biométrique selon la revendication 1 ou 2, dans lequel ladite unité de commande (38) du dispositif d'authentification biométrique, à l'instant d'enregistrement desdites données de caractéristiques biométriques, désembrouille ladite image prise brouillée provenant du dispositif de capture d'image (1), crée les premières données de caractéristiques biométriques relativement grossières et les deuxièmes données de caractéristiques biométriques relativement fines pour ledit utilisateur à partir de ladite image prise désembrouillée, brouille et transmet à ladite carte à puce (5) lesdites premières données de caractéristiques biométriques, et transmet à ladite carte à puce (5) lesdites deuxièmes données de caractéristiques biométriques en tant que deuxièmes données de caractéristiques biométriques chiffrées,
et dans lequel ladite carte à puce (5) mémorise lesdites premières données biométriques brouillées, et déchiffre et mémorise lesdites deuxièmes données de caractéristiques biométriques chiffrées.

4. Système d'authentification biométrique selon la revendication 3, dans lequel ladite unité de commande (38) brouille lesdites données de vérification finales et transmet les données de vérification finales brouillées audit dispositif de lecture/écriture de carte à puce (9),
et dans lequel ledit dispositif de lecture/écriture de carte à puce (9) désembrouille et chiffre lesdites données de vérification finales brouillées et transmet les données de vérification finales chiffrées à ladite unité de commande (38).

5. Système d'authentification biométrique selon l'une quelconque des revendications précédentes, dans lequel ladite unité dudit dispositif de capture d'image (1) peut être utilisée pour capturer des images des vaisseaux sanguins d'une paume dudit utilisateur.

6. Procédé d'authentification biométrique pour vérifier des données de caractéristiques biométriques détectées d'un corps vivant par rapport à des données de caractéristiques biométriques enregistrées pour une authentification individuelle d'un utilisateur, comprenant les étapes consistant à :
capturer une image dudit corps vivant dans un dispositif de capture d'image (1), et brouiller et transmettre l'image prise à une unité de commande (38) ;
désembrouiller ladite image prise brouillée transmise dans ladite unité de commande (38) ;
recevoir des premières données de caractéristiques biométriques relativement grossières d'un utilisateur, dans un état brouillé, d'une carte à puce (5) de l'utilisateur, les premières données de caractéristiques biométriques étant mémorisées dans l'état brouillé dans la carte à puce ;
effectuer une vérification primaire de ladite image prise par rapport auxdites premières données de caractéristiques, et créer des données de vérification finales dans ladite unité de commande (38) ;
brouiller et transmettre à ladite carte à puce (5) lesdites données de vérification finales ; et
désembrouiller lesdites données de vérification finales, et effectuer une vérification secondaire avec des deuxièmes données de caractéristiques biométriques relativement fines mémorisées de l'utilisateur, dans ladite carte à puce (5), dans lequel les deuxièmes données de caractéristiques biométriques sont mémorisées dans la carte à puce dans un état déchiffré ; et
dans lequel ladite image prise comprend une image des vaisseaux sanguins dudit corps vivant,
et dans lequel lesdites premières données de caractéristiques biométriques sont des données de caractéristiques relativement grossières de ladite image de vaisseaux sanguins, et lesdites deuxièmes données de caractéristiques biométriques sont des données de caractéristiques relativement fines de ladite image de vaisseaux sanguins.

7. Procédé d'authentification biométrique selon la revendication 6, dans lequel ladite vérification primaire et la création des données de vérification finales comprennent :
une étape d'alignement de ladite image prise et desdites premières données de caractéristiques biométriques ; et
une étape de création desdites données de vérification finales à partir de ladite image prise.

8. Procédé d'authentification biométrique selon la revendication 6 ou 7, comprenant en outre une étape d'enregistrement pour enregistrer lesdites données de caractéristiques,
dans lequel ladite étape d'enregistrement comprend les étapes consistant à :
désembrouiller une image prise brouillée du dispositif de capture d'image (1) dans ladite unité de commande (38) ;
créer, à partir de ladite image prise désembrouillée, des premières données de caractéristiques biométriques relativement grossières et des deuxièmes données de caractéristiques biométriques relativement fines dudit utilisateur ;
brouiller lesdites premières données de caractéristiques biométriques, et transmettre les premières données de caractéristiques biométriques brouillées à ladite carte à puce (5) ;
transmettre les deuxièmes données de caractéristiques biométriques chiffrées à ladite carte à puce (5) ;
déchiffrer lesdites deuxièmes données de caractéristiques biométriques chiffrées ; et
mémoriser les premières données de caractéristiques biométriques brouillées et les deuxièmes données de caractéristiques biométriques déchiffrées, dans ladite carte à puce (5).

9. Procédé d'authentification biométrique selon l'une quelconque des revendications 6 à 8, comprenant en outre les étapes consistant à :
brouiller lesdites données de vérification finales et transmettre les données de vérification finales brouillées à un dispositif de lecture/écriture de carte à puce (9) ;
désembrouiller et chiffrer lesdites données de vérification finales brouillées dans ledit dispositif de lecture/écriture de carte à puce (9) ; et
transmettre lesdites données de vérification finales chiffrées à ladite unité de commande (38) à partir dudit dispositif de lecture/écriture de carte à puce (9).

10. Procédé d'authentification biométrique selon l'une quelconque des revendications 6 à 9, dans lequel ladite image de vaisseaux sanguins comprend les vaisseaux sanguins d'une paume dudit utilisateur.
